# EUROPÄISCHE PATENTSCHRIFT

(11) **EP 3 307 491 B1**
(45) Veröffentlichungstag und Bekanntmachung des Hinweises auf die Patenterteilung: **04.09.2019**
(21) Anmeldenummer: 16736383.7
(22) Anmeldetag: 05.07.2016
(51) Int. Cl.: B25J 9/00, B25J 9/04, B25J 11/00, B25J 9/10

(54) **BESCHICHTUNGSANLAGENROBOTER, INSBESONDERE HANDHABUNGSROBOTER**
COATING PLANT ROBOT, IN PARTICULAR MANIPULATING ROBOT
ROBOT POUR INSTALLATION DE REVÊTEMENT, EN PARTICULIER ROBOT MANIPULATEUR

(30) Priorität: 14.07.2015 DE 102015009163
(43) Veröffentlichungstag der Anmeldung: 18.04.2018
(73) Patentinhaber: Dürr Systems AG, 74321 Bietigheim-Bissingen (DE)
(72) Erfinder: IMLE, Matthias, 74385 Pleidelsheim (DE)
(74) Vertreter: v. Bezold & Partner Patentanwälte - PartG mbB
(86) Internationale Anmeldenummer: PCT/EP2016/001147
(87) Internationale Veröffentlichungsnummer: WO 2017/008889

(56) Entgegenhaltungen:
- GB-A- 2 516 545
- KR-A- 20140 012 481
- US-A- 4 342 536
- US-A- 5 423 648

## Beschreibung

Die Erfindung betrifft einen Beschichtungsanlagenroboter, insbesondere als Handhabungsroboter zum Öffnen oder Schließen einer Kraftfahrzeugkarosserie im Rahmen eines Lackiervorgangs.

In modernen Lackieranlagen zur Lackierung von Kraftfahrzeugkarosserien werden die Türen und Hauben (Kofferraumdeckel und Motorhaube) während des Lackiervorgangs geöffnet, um eine Innenlackierung im Innenraum der Kraftfahrzeugkarosserie vornehmen zu können. Anschließend müssen die Türen und Hauben dann wieder geschlossen werden. Hierzu werden üblicherweise Handhabungsroboter eingesetzt, die in der Regel als SCARA-Roboter (SCARA: Selective Compliance Assembly Robot Arm) ausgebildet sind und ausschließlich parallele, jeweils senkrecht ausgerichtete Drehachsen aufweisen. Diese SCARA-Roboter führen üblicherweise einen Greifer zum Öffnen der Türen der Kraftfahrzeugkarosserie.

Nachteilig an derartigen SCARA-Robotern ist die relativ geringe mechanische Steifigkeit, was sowohl bei einer statischen Belastung als auch bei einer dynamischen Belastung zum Problem werden kann.

Ein weiterer Nachteil der bekannten SCARA-Roboter ist die beschränkte Reichweite. Dieses Problem kann zwar durch eine zusätzliche lineare Verfahrachse gelöst werden, auf welcher der SCARA-Roboter verschiebbar montiert ist. Allerdings ist eine solche lineare Verfahrachse verschmutzungsanfällig und mit zusätzlichen Investitions- und Wartungskosten verbunden. Eine andere Lösung des Problems der beschränkten Reichweite besteht darin, zusätzliche Gelenke und Roboterglieder vorzusehen, wodurch sich die Reichweite des SCARA-Roboters vergrößern lässt. Nachteilig an dieser Lösung ist jedoch die Tatsache, dass der SCARA-Roboter auch im eingeklappten Zustand eine relative große Störkontur bildet, wobei die Störkontur ein Hindernis für andere Roboter und für eine abwärts gerichtete Luftströmung in der Lackierkabine bildet.

Weiterhin ist zum Stand der Technik hinzuweisen auf EP 1 614 480 A1 und DE 10 2005 033 972 A1. Diese Druckschriften offenbaren einen Applikationsroboter mit einer Roboterkinematik, die eine serielle Kinematik mit einer Parallelkinematik kombiniert. Allerdings handelt es sich bei diesem bekannten Roboter nicht um einen Handhabungsroboter, sondern um einen Lackierroboter. Darüber hinaus ist die Parallelkinematik hierbei proximal angeordnet und an einer Decke oder einer Wand einer Lackierkabine angebracht. Die Parallelkinematik bildet hierbei also keinen Roboterarm im eigentlichen Sinne.

Ferner ist zum allgemeinen technologischen Hintergrund der Erfindung hinzuweisen auf KR 2014 0012481 A, DE 10 2011 121 343 A1, US 5 423 648, JP 2003 089 090 A und US 4 342 536.

GB 2 516 545 A offenbart einen Roboter gemäß dem Oberbegriff von Anspruch 1. Dieser bekannte Roboter ist jedoch nicht dazu vorgesehen, in einer Lackieranlage eingesetzt zu werden. Dieser bekannte Roboter würde jedoch bei einem Einsatz in einer Lackierkabine der abwärts gerichteten Luftströmung in der Lackierkabine eine relativ große Störkontur entgegensetzen.

Der Erfindung liegt deshalb die Aufgabe zugrunde, einen Handhabungsroboter zu schaffen, der gegenüber den eingangs beschriebenen bekannten Robotern verbessert ist.

Diese Aufgabe wird durch einen erfindungsgemäßen Beschichtungsanlagenroboter gemäß dem Hauptanspruch gelöst.

Der erfindungsgemäße Beschichtungsanlagenroboter weist zunächst in Übereinstimmung mit dem Stand der Technik eine Roboterkinematik auf, um einen Effektor im Raum bewegen zu können.

Beim dem Effektor kann es sich beispielsweise um ein Handhabungswerkzeug (z. B. Greifer) eines Handhabungsroboters handeln. Es besteht jedoch alternativ auch die Möglichkeit, dass es sich bei dem Effektor um ein Applikationsgerät eines Applikationsroboters handelt. Bei dem Applikationsgerät kann es sich beispielsweise um einen Rotationszerstäuber (z. B. Glockenzerstäuber, Scheibenzerstäuber), einen Luftzerstäuber, einen Airmix-Zerstäuber, einen Airless-Zerstäuber, einen Ultraschallzerstäuber oder einen Streifenapplikator (z. B. gemäß DE 10 2013 002 412 A1) handeln, wobei diese Typen von Applikationsgeräten an sich aus dem Stand der Technik bekannt sind und deshalb nicht näher beschrieben werden müssen.

Der im Rahmen der Erfindung verwendete Begriff eines Beschichtungsanlagenroboters umfasst also alle Robotertypen, die in einer Beschichtungsanlage eingesetzt werden, wie beispielsweise Handhabungsroboter (z. B. Türöffner, Haubenöffner), Applikationsroboter (z. B. Lackierroboter, Kleberoboter) .

Die erfindungsgemäße Roboterkinematik weist zwei Roboterarme auf. Die Erfindung zeichnet sich nun dadurch aus, dass die Roboterarme der Roboterkinematik eine Parallelkinematik aufweisen. Hierbei unterscheidet sich die Erfindung auch von dem Stand der Technik gemäß EP 1 614 480 A1. Zwar offenbart auch diese Druckschrift eine Roboterkinematik, die eine serielle Kinematik mit einer Parallelkinematik verbindet. Allerdings ist die Parallelkinematik bei diesem Stand der Technik proximal und ortsfest an einer Decke oder einer Wand einer Lackierkabine angeordnet und bildet somit keinen Roboterarm im Sinne der Erfindung.

In einem bevorzugten Ausführungsbeispiel der Erfindung weist der Roboterarm mit der Parallelkinematik mindestens zwei Armteile mit jeweils zwei Drehgelenken auf, so dass der Roboterarm mit der Parallelkinematik ein Gelenkviereck bildet, wobei die beiden Armteile jeweils relativ zu unmittelbar angrenzenden Robotergliedern drehbar sind. Die Drehgelenke sind hierbei vorzugsweise jeweils an den Enden der einzelnen Armteile angeordnet. Weiterhin ist zu erwähnen, dass die Drehgelenke des einen Armteils andere Drehachsen haben als die Drehgelenke des anderen Armteils. Dadurch unterscheidet sich die Erfindung von herkömmlichen Industrierobotern mit parallelen Armteilen, die an ihren Enden jeweils gemeinsame Drehachsen haben. Ferner ist zu erwähnen, dass die Drehachsen der beiden Armteile vorzugsweise alle parallel zueinander verlaufen. Die Parallelkinematik des Roboterarms weist vorzugsweise nur einen Drehantrieb auf, um die Armteile des Roboterarms relativ zu einem unmittelbar angrenzenden Roboterglied zu schwenken. Dadurch unterscheidet sich die erfindungsgemäße Parallelkinematik beispielsweise auch von herkömmlichen Parallelkinematiken, wie sie beispielsweise aus EP 1 614 480 A1 bekannt sind, da Parallelkinematiken üblicherweise keinen Rotationsantrieb aufweisen, sondern Linearantriebe, die auf den Effektor wirken.

In dem bevorzugten Ausführungsbeispiel der Erfindung bilden die Drehachsen der vier Drehgelenke der beiden Armteile ein Parallelogramm, d. h. ein ebenes Viereck, bei dem die gegenüber liegenden Kanten jeweils paarweise parallel sind. Dies bedeutet, dass eine Schwenkung der Parallelkinematik nur zu einer Änderung der räumlichen Position des kinematisch folgenden Roboterglieds führt, wohingegen die räumliche Ausrichtung (Winkellage) des kinematisch folgenden Roboterglieds durch die Schwenkbewegung der Parallelkinematik nicht beeinflusst wird.

Es besteht jedoch alternativ auch die Möglichkeit, dass die vier Drehgelenke der beiden Armteile ein Trapez bilden, d. h. ein Viereck mit zwei gegenüberliegenden parallelen Seiten und zwei nicht-parallelen gegenüberliegenden Seiten. Die beiden Armteile bilden hierbei vorzugsweise die gegenüberliegenden parallelen Seiten des Trapezes.

In dem bevorzugten Ausführungsbeispiel der Erfindung ist der Roboterarm mit der Parallelkinematik kinematisch unmittelbar zwischen zwei angrenzenden Robotergliedern angeordnet, wobei der Roboterarm der Parallelkinematik relativ zu den beiden unmittelbar angrenzenden Robotergliedern schwenkbar ist. Hierbei ermöglicht es die Parallelkinematik, dass die unmittelbar angrenzenden Roboterglieder bei einer Schwenkbewegung der Parallelkinematik in einer konstanten Winkelbeziehung relativ zueinander gehalten werden.

Weiterhin ist zu erwähnen, dass die Roboterkinematik gemäß der Erfindung nicht nur einen Roboterarm mit einer Parallelkinematik aufweist, sondern zwei Roboterarme mit einer Parallelkinematik, wobei die beiden Roboterarme mit der Parallelkinematik kinematisch seriell hintereinander angeordnet sind. Hierbei sind kinematisch seriell zwischen den beiden Roboterarmen mit einer Parallelkinematik weitere Roboterglieder angeordnet. In dem bevorzugten Ausführungsbeispiel sind jedoch die Drehgelenke der beiden Roboterarme mit den Parallelkinematiken unabhängig von der Stellung des Beschichtungsanlagenroboters mit ihren Drehachsen stets im Wesentlichen waagerecht ausgerichtet.

Gemäß der Erfindung weist die Roboterkinematik ein proximal angeordnetes erstes Roboterglied, ein relativ dazu schwenkbares zweites Roboterglied, den ersten Roboterarm mit der Parallelkinematik, ein drittes Roboterglied, ein relativ zu dem dritten Roboterglied schwenkbares viertes Roboterglied, den zweiten Roboterarm mit der Parallelkinematik, ein fünftes Roboterglied und ein sechstes Roboterglied auf, das relativ zu dem fünften Roboterglied schwenkbar ist.

In dem bevorzugten Ausführungsbeispiel der Erfindung ist das schwenkbare zweite Roboterglied unter dem ersten Roboterglied angeordnet und um eine erste Schwenkachse schwenkbar. Der erste Roboterarm mit der Parallelkinematik ist dagegen relativ zu dem zweiten Roboterglied um eine vorzugsweise waagerechte zweite Achse schwenkbar. Das vierte Roboterglied ist dagegen relativ zu dem dritten Roboterglied um eine vorzugsweise vertikale dritte Schwenkachse schwenkbar. Weiterhin ist der zweite Roboterarm mit der Parallelkinematik relativ zu dem vierten Roboterglied um eine vorzugsweise waagerechte vierte Schwenkachse schwenkbar. Schließlich ist das sechste Roboterglied relativ zu dem fünften Roboterglied um eine vorzugsweise senkrechte fünfte Schwenkachse schwenkbar.

Weiterhin ist zu erwähnen, dass das proximale erste Roboterglied vorzugsweise ortsfest angeordnet ist, so dass auf eine zusätzliche lineare Verfahrschiene verzichtet werden kann. Dies ist vorteilhaft, weil dadurch die Investitions- und Wartungskosten des Beschichtungsanlagenroboters geringer sind und auch weil keine Verschmutzung der linearen Verfahrachse auftreten kann. Es ist jedoch im Rahmen der Erfindung alternativ auch möglich, dass das proximale erste Roboterglied an einer Verfahrschiene verfahrbar ist.

In dem bevorzugten Ausführungsbeispiel der Erfindung ist der Beschichtungsanlagenroboter ein Handhabungsroboter und der Effektor ein Handhabungswerkzeug, insbesondere ein Greifer oder ein Haken, der ausgebildet ist, um eine Kraftfahrzeugkarosserie im Rahmen eines Lackiervorgangs zu öffnen oder zu schließen.

Beispielsweise kann der Handhabungsroboter ein Türöffner sein, der ausgebildet ist, um eine Tür einer Kraftfahrzeugkarosserie im Rahmen eines Lackiervorgangs zu öffnen oder zu schließen.

Der Handhabungsroboter kann jedoch auch ein Haubenöffner sein, der ausgebildet ist, um eine Haube (z. B. Motorhaube, Kofferraumdeckel) einer Kraftfahrzeugkarosserie im Rahmen eines Lackiervorgangs zu öffnen oder zu schließen.

Der erfindungsgemäße Handhabungsroboter ist vorzugsweise ortsfest angeordnet und weist trotzdem einen ausreichend großen Arbeitsraum auf, um alle Türen an einer Seite einer Kraftfahrzeugkarosserie und eventuell sogar den Kofferraumdeckel und die Motorhaube der Kraftfahrzeugkarosserie zu öffnen. Die hierfür erforderliche Erweiterung des Arbeitsraums des Handhabungsroboters gegenüber herkömmlichen SCARA-Robotern wird durch die erfindungsgemäße Roboterkinematik ermöglicht.

Ferner ist zu bemerken, dass der Beschichtungsanlagenroboter vorzugsweise eine maximal zulässige Traglast von mindestens 1 kg, 2 kg, 5 kg, 10 kg, 20 kg oder sogar mindestens 50 kg aufweist. Dadurch unterscheidet sich der erfindungsgemäße Beschichtungsanlagenroboter auch von anderen Robotern auf anderen technischen Gebieten, beispielsweise aus dem medizinischen Bereich, wo wesentlich geringere Traglasten erforderlich sind.

Weiterhin ist zu bemerken, dass der Beschichtungsanlagenroboter einen relativ großen Arbeitsbereich aufweist, der sich in waagerechter und in senkrechter Richtung vorzugsweise über eine Breite, Höhe bzw. Länge von mindestens 1 m, 2 m, 4 m oder 6 m erstreckt. Die Länge des Arbeitsbereichs wird hierbei in einer Lackieranlage entlang der Förderrichtung der Lackierstraße gemessen, wohingegen die Breite des Arbeitsbereichs quer zur Förderrichtung der Lackierstraße gemessen wird.

Ferner ist zu bemerken, dass der Beschichtungsanlagenroboter vorzugsweise mindestens zwei, drei, vier oder sogar mindestens fünf bewegliche Roboterachsen aufweist. Allerdings sollte der erfindungsgemäße Beschichtungsanlagenroboter nicht zu viele Roboterachsen aufweisen, da darunter die Steifheit der Roboterkinematik leidet. Der erfindungsgemäße Beschichtungsanlagenroboter weist deshalb vorzugsweise höchstens sieben, sechs oder höchstens fünf bewegliche Roboterachsen auf. In dem bevorzugten Ausführungsbeispiel der Erfindung hat der Beschichtungsanlagenroboter deshalb fünf bewegliche Achsen.

Der Antrieb des erfindungsgemäßen Beschichtungsanlagenroboters erfolgt vorzugsweise durch einen elektrischen Achsenantrieb, beispielsweise mittels eines Drehstromsynchronmotors. Die Erfindung ist jedoch hinsichtlich des mechanischen Antriebs des Beschichtungsanlagenroboters nicht auf dieses Beispiel beschränkt.

Darüber hinaus ist zu erwähnen, dass die Roboterkinematik bei dem erfindungsgemäßen Beschichtungsanlagenroboter vorzugsweise kombiniert seriell und parallel ist.

Der im Rahmen der Erfindung verwendete Begriff eines Roboters impliziert vorzugweise, dass der Roboter frei programmierbar ist, wie es auch der normgemäßen Definition eines Roboters entspricht.

Ferner ist zu erwähnen, dass die Roboterkinematik vorzugsweise so ausgebildet ist, dass der Effektor (z. B. Greifwerkzeug) bei einer Roboterbewegung in einer konstanten räumlichen Ausrichtung (Winkellage) zur Senkrechten gehalten wird, wie es auch bei einem herkömmlichen SCARA-Roboter der Fall ist.

In dem bevorzugten Ausführungsbeispiel der Erfindung sind die beiden Armteile der Parallelkinematik beide auf derselben Seite der jeweils unmittelbar angrenzenden Roboterglieder schwenkbar angebracht. Es besteht jedoch auch die Möglichkeit, dass die Parallelkinematik vier Armteile aufweist, wobei zwei der Armteile auf der einen Seite der angrenzenden Roboterglieder schwenkbar montiert sind, während die beiden anderen Armteile auf der gegenüberliegenden Seite der angrenzenden Roboterglieder schwenkbar montiert sind.

Gemäß der Erfindung ist der Beschichtungsanlagenroboter mindestens teilweise in einer Lackierkabine angeordnet, wobei in der Lackierkabine eine abwärts gerichtete Luftströmung erzeugt wird, um überschüssigen Beschichtungsmittelnebel ("Overspray") möglichst schnell nach unten aus der Lackierkabine abzuführen, beispielsweise durch einen als Gitterrost ausgebildeten Kabinenboden. Die abwärts gerichtete Luftströmung wird hierbei üblicherweise durch eine sogenannte Filterdecke der Lackierkabine erzeugt, was an sich aus dem Stand der Technik bekannt ist und deshalb nicht näher beschrieben werden muss. Der Beschichtungsanlagenroboter ist hierbei zusammenklappbar, um der abwärts gerichteten Luftströmung in der Lackierkabine im zusammengeklappten Zustand eine möglichst kleine Störkontur entgegenzusetzen. Die erfindungsgemäße Roboterkinematik ermöglicht vorteilhaft eine Minimierung der Störkontur des Beschichtungsanlagenroboters, der somit in waagerechter Richtung eine Störfläche von weniger als 2 m² hat, vorzugsweise weniger als 1 m², 0,5 m², 0,25 m² oder sogar weniger als 0,1 m². Hierbei ist auch zu erwähnen, dass sich die Störkontur des Beschichtungsanlagenroboters im eingeklappten Zustand in Längsrichtung der Lackierkabine vorzugsweise über eine Länge von weniger als 2 m, 1,5 m, 1 m oder sogar weniger als 75 cm erstreckt. Quer zur Längsrichtung der Lackierkabine erstreckt sich die Störfläche des Beschichtungsanlagenroboters im eingeklappten Zustand dagegen vorzugsweise über eine Breite von weniger als 1 m, 75 cm oder sogar weniger als 50 cm.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:

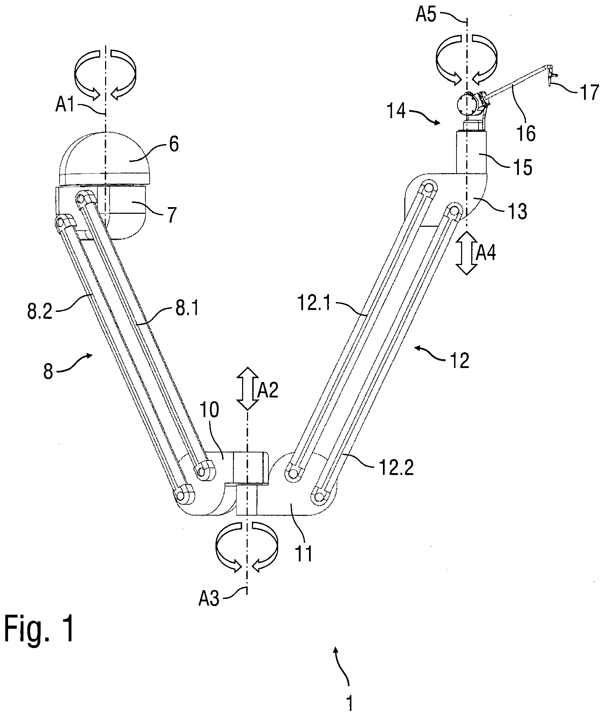

- Figur 1: eine Perspektivansicht eines erfindungsgemäßen Handhabungsroboters zum Öffnen von Türen und Hauben einer Kraftfahrzeugkarosserie bei einem Lackiervorgang in einer Lackieranlage,

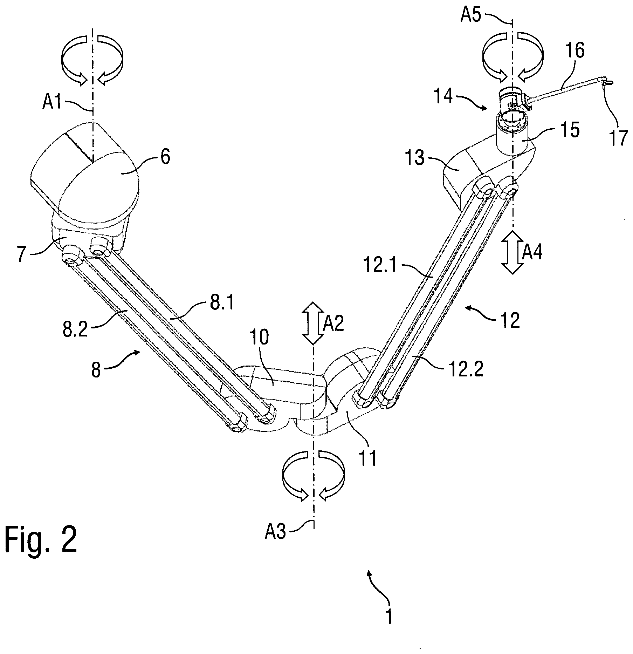

- Figur 2: eine Perspektivansicht des Handhabungsroboters aus Figur 1 in einer anderen Roboterstellung,

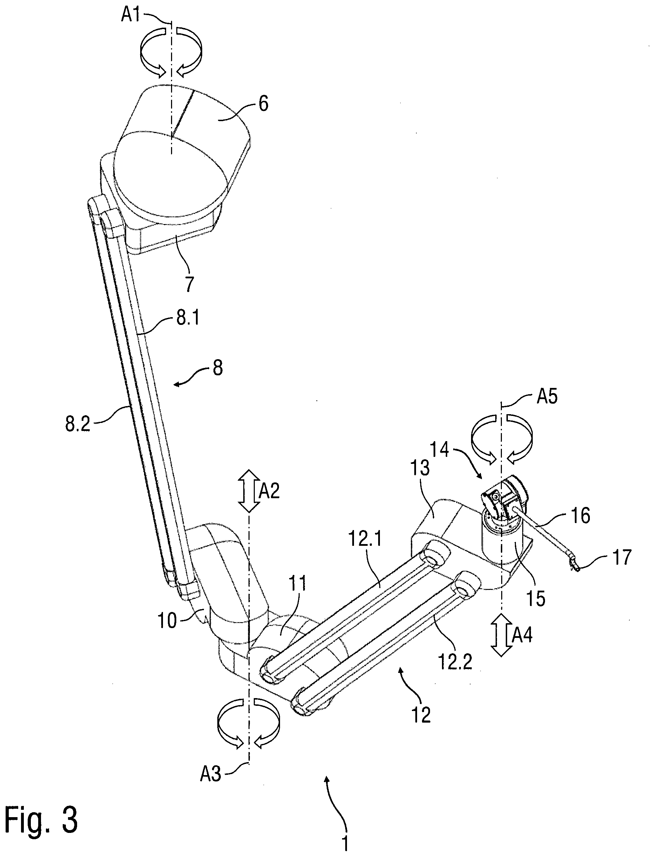

- Figur 3: eine Perspektivansicht des Handhabungsroboters aus den Figuren 1 und 2 in einer anderen Roboterstellung,
- Figur 4: eine schematische Aufsicht auf eine Lackierkabine mit dem erfindungsgemäßen Handhabungsroboter im eingeklappten Zustand,
- Figuren 5A und 5B: schematische Darstellungen der erfindungsgemäßen Parallelkinematik in Form eines Parallelogramms und
- Figuren 6A und: 6B eine Abwandlung der Figuren 5A und 5B, wobei die Parallelkinematik die Form eines Trapezes hat.

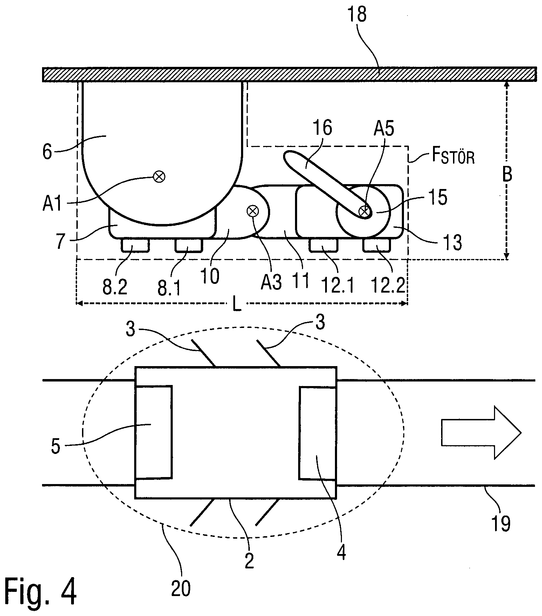

Die Zeichnungen zeigen ein bevorzugtes Ausführungsbeispiel eines erfindungsgemäßen Handhabungsroboters 1, der in einer Lackieranlage zur Lackierung von Kraftfahrzeugkarosserien 2 (vgl. Fig. 4) eingesetzt werden kann, um Türen 3, Motorhaube 4 und Kofferraumdeckel 5 der Kraftfahrzeugkarosserie 2 im Rahmen eines Lackiervorgangs zu öffnen, damit der Innenraum der Kraftfahrzeugkarosserie 2 lackiert werden kann.

Der erfindungsgemäße Handhabungsroboter 1 weist zunächst ein erstes Roboterglied 6 auf, das kinematisch proximal angeordnet ist. Das Roboterglied 6 ist ortsfest angeordnet, so dass auf eine zusätzliche Verfahrschiene verzichtet werden kann. Der Verzicht auf eine lineare Verfahrschiene ist vorteilhaft, weil dadurch die Investitions- und Wartungskosten geringer sind und weil durch den Wegfall der Verfahrachse keine Verschmutzungsprobleme an der Verfahrachse auftreten können.

Unterhalb des proximalen Roboterglieds 6 ist ein zweites Roboterglied 7 angeordnet, wobei das zweite Roboterglied 7 relativ zu dem ersten Roboterglied 6 um eine senkrechte Schwenkachse A1 drehbar ist.

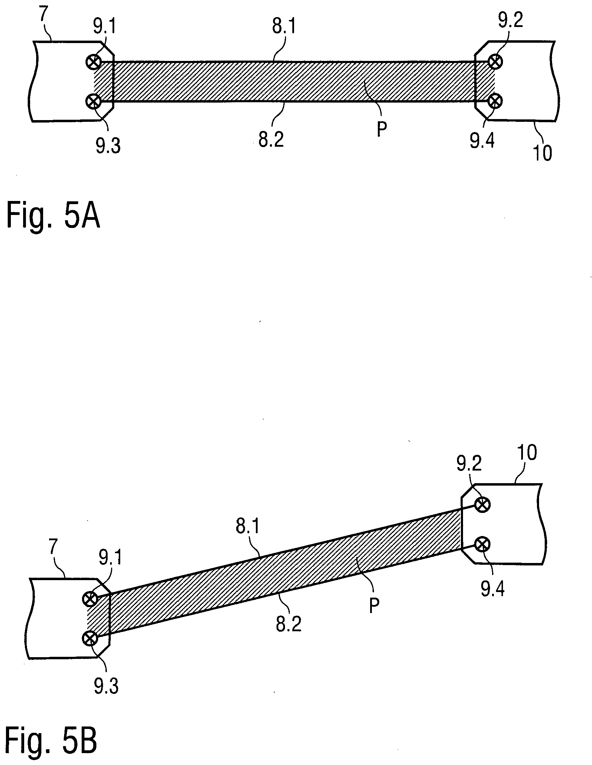

An dem Roboterglied 7 ist ein Roboterarm 8 schwenkbar angebracht, wobei der Roboterarm 8 eine Parallelkinematik aufweist. Die Parallelkinematik des Roboterarms 8 besteht im Wesentlichen aus zwei Armteilen 8.1, 8.2, die kinematisch parallel und nebeneinander angeordnet sind. Die beiden Armteile 8.1, 8.2 weisen an ihren Enden jeweils ein Drehgelenk (vgl. Figuren 5A, 5B) auf, wobei die Drehgelenke der beiden Armteile 8.1, 8.2 vier Drehachsen 9.1-9.4 aufweisen, die unterschiedlich sind. Die Drehachsen 9.1, 9.2 des Armteils 8.1 sind also anders gelegen als die Drehachsen 9.3, 9.4 des anderen Armteils 8.2. Dies bedeutet, dass die Drehgelenke der beiden Armteile 8.1, 8.2 ein Gelenkviereck aufspannen, das in diesem Ausführungsbeispiel die Form eines Parallelogramms P hat, wie aus den Figuren 5A und 5B ersichtlich ist.

Kinematisch hinter dem Roboterarm 8 mit der Parallelkinematik ist ein weiteres Roboterglied 10 angebracht, wobei eine Schwenkung des Roboterarms 8 zur Folge hat, dass das Roboterglied 10 zwar in seiner Position im Raum verändert wird, wobei jedoch die räumliche Ausrichtung (Winkellage zur Senkrechten) des Roboterglieds 10 unverändert bleibt. Der Roboterarm 8 ist also relativ zu dem Roboterglied 7 um eine Schwenkachse A2 schwenkbar, wobei der Schwenkvorgang zu einer seitlichen Verlagerung und zu einer Anhebung bzw. Absenkung des Roboterglieds 10 führt.

Darüber hinaus weist der Handhabungsroboter 1 ein weiteres Roboterglied 11 auf, das relativ zu dem Roboterglied 10 um eine senkrechte Schwenkachse A3 drehbar ist.

An dem Roboterglied 11 ist ein weiterer Roboterarm 12 mit einer Parallelkinematik schwenkbar angebracht, wobei der Roboterarm 12 wieder zwei Armteile 12.1, 12.2 aufweist. Der Roboterarm 12 entspricht ansonsten im Wesentlichen dem Roboterarm 8, so dass zur Vermeidung von Wiederholungen auf die vorstehende Beschreibung verwiesen wird. Ein Schwenken des Roboterarms 12 um eine Schwenkachse A4 führt zu einer seitlichen Verlagerung und zu einer Anhebung bzw. Absenkung eines mit dem Roboterarm 12 verbundenen weiteren Roboterglieds 13.

An dem Roboterglied 13 ist ein Handhabungswerkzeug 14 angebracht, das geeignet ist, um die Türen 3, den Kofferraumdeckel 5 und die Motorhaube 4 der Kraftfahrzeugkarosserie 2 zu öffnen (vgl. Figur 4). Das Handhabungswerkzeug 14 besteht im Wesentlichen aus einem sechsten Roboterglied 15, das relativ zu dem Roboterglied 13 um eine Drehachse A5 drehbar ist. Das sechste Roboterglied 15 trägt einen Schwenkarm 16 zur Positionierung eines Greifers 17. Der Aufbau und die Funktionsweise des Handhabungswerkzeugs 14 sind an sich aus dem Stand der Technik an sich bekannt und müssen deshalb nicht näher beschrieben werden.

Bei einer Positionsänderung des Handhabungsroboters 1 wird das Handhabungswerkzeug 14 im Raum umpositioniert, wobei die räumliche Ausrichtung (Winkellage zur Senkrechten) des Handhabungswerkzeugs 14 jedoch nicht beeinflusst wird, was durch die erfindungsgemäße Roboterkinematik erreicht wird.

Figur 4 zeigt einen zusammengeklappten Zustand des Handhabungsroboters 1. Daraus ist ersichtlich, dass der Handhabungsroboter 1 im zusammengeklappten Zustand nur eine relativ kleine Störkontur in der Lackierkabine bildet, wobei die Lackierkabine seitlich durch eine Kabinenwand 18 begrenzt wird. Die Störkontur des Handhabungsroboters 1 erstreckt sich hierbei in waagerechter Richtung über eine Störfläche F_{STÖR}, die kleiner ist als 0,5 m². Weiterhin ist zu erwähnen, dass sich die Störkontur im eingeklappten Zustand des Handhabungsroboter 1 quer zur Längsrichtung der Lackierkabine nur über eine Breite B erstreckt, die kleiner ist als 0,5 m. Darüber erstreckt sich die Störkontur des Handhabungsroboters 1 im eingeklappten Zustand auch in Längsrichtung der Lackierkabine nur über eine relativ geringe Länge L, die kleiner ist als 1 m.

Zum einen ist die kleine Störkontur des Handhabungsroboters 1 vorteilhaft, weil dadurch die abwärts gerichtete Luftströmung in der Lackierkabine nur geringfügig beeinflusst wird.

Zum anderen ist die kleine Störkontur des Handhabungsroboters 1 aber auch vorteilhaft, weil der Handhabungsroboter 1 so im eingeklappten Zustand nur ein kleines Hindernis für andere Roboter (z. B. Lackierroböter) in der Lackierkabine bildet.

Figur 4 zeigt weiterhin, dass die Kraftfahrzeugkarosserie 2 von einem nur schematisch dargestellten Förderer 19 durch die Lackierkabine gefördert wird, wobei die Förderrichtung durch einen Blockpfeil dargestellt ist. In der Zeichnung ist hierbei ein Arbeitsbereich 20 des Handhabungsroboters gestrichelt dargestellt. Dies bedeutet, dass der Handhabungsroboter 1 innerhalb des Arbeitsbereichs 20 die Türen 3, den Kofferraumdeckel 5 und die Motorhaube 4 öffnen kann. Wichtig ist hierbei, dass die Reichweite des Handhabungsroboters 1 aufgrund der erfindungsgemäßen Roboterkinematik so groß ist, dass der Handhabungsroboter 1 die Türen 3, die Motorhaube 4 und den Kofferraumdeckel 5 der Kraftfahrzeugkarosserie 2 öffnen kann, ohne dass eine Umpositionierung des ortsfesten Handhabungsroboters 1 oder der Kraftfahrzeugkarosserie 2 erforderlich ist.

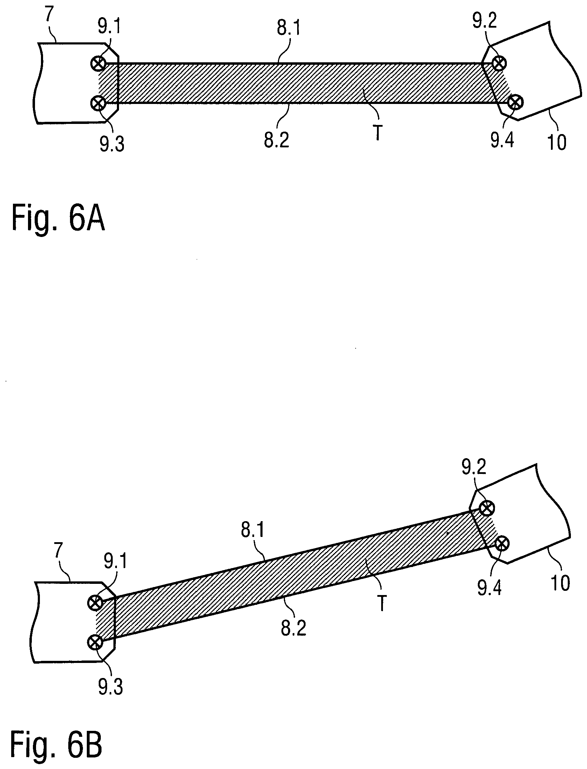

Figur 6A und 6B zeigen eine Abwandlung der Figuren 5A und 5B.

Diese Abwandlung entspricht jedoch weitgehend der vorstehenden Beschreibung, so dass zur Vermeidung von Wiederholungen auf die vorstehende Beschreibung verweisen wird, wobei für entsprechende Einzelheiten dieselben Bezugszeichen verwendet werden.

Eine Besonderheit dieses Ausführungsbeispiels besteht darin, dass die Drehachsen 9.1-9.4 der Drehgelenke der Parallelkinematik nicht - wie in den Figuren 5A und 5B - ein Parallelogramm P aufspannen, sondern ein Trapez T.

### Bezugszeichenliste:

- 1: Handhabungsroboter
- 2: Kraftfahrzeugkarosserie
- 3: Türen der Kraftfahrzeugkarosserie
- 4: Motorhaube der Kraftfahrzeugkarosserie
- 5: Kofferraumdeckel der Kraftfahrzeugkarosserie
- 6: Erstes Roboterglied
- 7: Zweites Roboterglied
- 8: Erster Roboterarm mit Parallelkinematik
- 8.1-8.2: Armteile des ersten Roboterarms
- 9.1-9.4: Drehachse der Drehgelenke der Parallelkinematik
- 10: Drittes Roboterglied
- 11: Viertes Roboterglied
- 12: Zweite Roboterarm mit Parallelkinematik
- 12.1-12.2: Armteile des zweiten Roboterarms
- 13: Fünftes Roboterglied
- 15: Sechstes Roboterglied
- 14: Handhabungswerkzeug
- 16: Schwenkbarer Arm des Handhabungswerkzeugs
- 17: Greifer des Handhabungswerkzeugs
- 18: Kabinenwand der Lackierkabine
- 19: Förderer
- 20: Arbeitsbereich
- A1-A5: Schwenkachsen
- B: Breite der Störkontur des Handhabungsroboters im zusammengeklappten Zustand
- F_{STÖR}: Waagerechte Störfläche der Störkontur des Handhabungsroboters im zusammengeklappten Zustand
- L: Länge der Störkontur des Handhabungsroboters im zusammengeklappten Zustand
- P: Parallelogrammform der Parallelkinematik
- T: Trapezform der Parallelkinematik

## Patentansprüche

1. Beschichtungsanlagenroboter (1), insbesondere als Handhabungsroboter (1) zum Öffnen oder Schließen einer Kraftfahrzeugkarosserie bei einem Lackiervorgang, mit einer Roboterkinematik (6-15) zur Bewegung eines Effektors (14) im Raum, mit:
a) einem proximal angeordneten ersten Roboterglied (6),
b) einem zweiten Roboterglied (7), das kinematisch hinter dem ersten Roboterglied (6) angeordnet und relativ zu dem ersten Roboterglied (6) beweglich ist,
c) einem ersten Roboterarm (8) mit einer Parallelkinematik, wobei der erste Roboterarm (8) kinematisch hinter dem zweiten Roboterglied (7) angeordnet und relativ zu dem zweiten Roboterglied (7) beweglich ist, und
d) einem dritten Roboterglied (10), das kinematisch hinter dem ersten Roboterarm (8) mit der Parallelkinematik angeordnet und relativ zu dem ersten Roboterarm (8) mit der Parallelkinematik beweglich ist,
e) einem vierten Roboterglied (11), das kinematisch hinter dem dritten Roboterglied (10) angeordnet und relativ zu dem dritten Roboterglied (10) beweglich ist,
f) einem zweiten Roboterarm (12) mit einer Parallelkinematik, wobei der zweite Roboterarm (10) kinematisch hinter dem vierten Roboterglied (11) angeordnet und relativ zu dem vierten Roboterglied (11) beweglich ist,
g) einem fünften Roboterglied (13), das kinematisch hinter dem zweiten Roboterarm (12) mit der Parallelkinematik angeordnet und relativ zu dem zweiten Roboterarm (12) mit der Parallelkinematik beweglich ist, und
h) einem sechsten Roboterglied (15), das kinematisch hinter dem fünften Roboterglied (13) angeordnet und relativ zu dem fünften Roboterglied (13) beweglich ist,
**dadurch gekennzeichnet,**
i) **dass** der Beschichtungsanlagenroboter (1) mindestens teilweise in einer Lackierkabine angeordnet ist,
j) **dass** in der Lackierkabine eine abwärts gerichtete Luftströmung herrscht, um überschüssigen Beschichtungsmittelnebel möglichst schnell nach unten aus der Lackierkabine abzuführen,
k) **dass** der Beschichtungsanlagenroboter (1) zusammenklappbar ist, um der abwärts gerichteten Luftströmung im zusammengeklappten Zustand eine möglichst kleine Störkontur entgegen zu setzen, und
l) **dass** sich die Störkontur des Beschichtungsanlagenroboters (1) im zusammengeklappten Zustand in waagerechter Richtung über eine Störfläche (F_{STÖR}) von weniger als 2m² erstreckt.

2. Beschichtungsanlagenroboter (1) nach Anspruch 1,
**dadurch gekennzeichnet,**
a) **dass** der erste Roboterarm (8) mit der Parallelkinematik mindestens zwei Armteile (8.1, 8.2) mit jeweils zwei Drehgelenken aufweist, so dass der erste Roboterarm (8) mit der Parallelkinematik ein Gelenkviereck bildet, wobei die beiden Armteile (8.1, 8.2) jeweils relativ zu unmittelbar angrenzenden Robotergliedern (7, 10) drehbar sind, und
b) **dass** die Drehgelenke des einen Armteils (8.1) andere Drehachsen haben als die Drehgelenke des anderen Armteils (8.2),
c) **dass** die Drehachsen der beiden Armteile (8.1, 8.2) vorzugsweise alle parallel verlaufen,
d) **dass** die Parallelkinematik vorzugsweise nur einen Drehantrieb aufweist, um die Armteile (8.1, 8.2) des ersten Roboterarms (8) relativ zu einem unmittelbar angrenzenden Roboterglied (7, 10) zu schwenken.

3. Beschichtungsanlagenroboter (1) nach Anspruch 2, **dadurch gekennzeichnet, dass** die Drehachsen der vier Drehgelenke der beiden Armteile (8.1, 8.2) an den Ecken eines Parallelogramms (P) oder eines Trapezes (T) liegen.

4. Beschichtungsanlagenroboter (1) nach einem der vorhergehenden Ansprüche, **dadurch gekennzeichnet,**
a) **dass** der erste Roboterarm (8) mit der Parallelkinematik kinematisch unmittelbar zwischen zwei angrenzenden Robotergliedern (7, 10) angeordnet ist,
b) **dass** der erste Roboterarm (8) mit der Parallelkinematik relativ zu den beiden unmittelbar angrenzenden Robotergliedern (7, 10) schwenkbar ist, und
c) **dass** der erste Roboterarm (8) mit der Parallelkinematik bei einer Schwenkbewegung die unmittelbar angrenzenden Roboterglieder (7, 10) in einer konstanten Winkelbeziehung relativ zueinander hält.

5. Beschichtungsanlagenroboter (1) nach einem der vorhergehenden Ansprüche, **dadurch gekennzeichnet,**
a) **dass** der erste Roboterarm (8) mit der Parallelkinematik und der zweite Roboterarm (12) mit der Parallelkinematik kinematisch seriell hintereinander angeordnet sind, und/oder
b) **dass** die Drehgelenke des ersten Roboterarms (8) mit der Parallelkinematik und/oder des zweiten Roboterarms (12) mit der Parallelkinematik unabhängig von der Stellung des Beschichtungsanlagenroboters (1) mit ihren Drehachsen stets im Wesentlichen waagerecht ausgerichtet sind.

6. Beschichtungsanlagenroboter (1) nach einem der vorhergehenden Ansprüche, **dadurch gekennzeichnet,**
a) **dass** zweite Roboterglied (7) um eine vorzugsweise senkrechte erste Schwenkachse (A1) relativ zu dem proximalen ersten Roboterglied (6) schwenkbar ist, und/oder
b) **dass** das zweite Roboterglied (7) vorzugsweise unter dem ersten Roboterglied (6) angeordnet ist, und/oder
c) **dass** der erste Roboterarm (8) mit der Parallelkinematik relativ zu dem zweiten Roboterglied (7) um eine vorzugsweise waagerechte zweite Schwenkachse (A2) schwenkbar ist, und/oder
d) **dass** das vierte Roboterglied (11) relativ zu dem dritten Roboterglied (10) um eine vorzugsweise vertikale dritte Schwenkachse (A3) schwenkbar ist, und/oder
e) **dass** der zweite Roboterarm (12) mit der Parallelkinematik relativ zu dem vierten Roboterglied (11) um eine vorzugsweise waagerechte vierte Schwenkachse (A4) schwenkbar ist, und/oder
f) **dass** das sechste Roboterglied (15) relativ zu dem fünften Roboterglied (13) um eine vorzugsweise senkrechte fünfte Schwenkachse (A5) schwenkbar ist.

7. Beschichtungsanlagenroboter (1) nach einem der vorhergehenden Ansprüche, **dadurch gekennzeichnet,**
a) **dass** das proximale erste Roboterglied (6) ortsfest angeordnet ist, oder
b) **dass** das proximale erste Roboterglied (6) an einer Verfahrschiene verfahrbar ist.

8. Beschichtungsanlagenroboter (1) nach einem der vorhergehenden Ansprüche, **dadurch gekennzeichnet,**
a) **dass** der Beschichtungsanlagenroboter (1) ein Handhabungsroboter (1) und der Effektor (14) ein Handhabungswerkzeug (14) ist, insbesondere ein Greifer (17) oder ein Haken, das ausgebildet ist, um eine Kraftfahrzeugkarosserie (2) bei einem Lackiervorgang zu öffnen oder zu schließen, und/oder
b) **dass** der Handhabungsroboter (1) ein Türöffner ist, der ausgebildet ist, um eine Tür (3) einer Kraftfahrzeugkarosserie (2) bei einem Lackiervorgang zu öffnen oder zu schließen, und/oder
c) **dass** der Handhabungsroboter (1) ein Haubenöffner ist, der ausgebildet ist, um eine Haube (4, 5), insbesondere eine Motorhaube (4) oder einen Kofferraumdeckel (5), einer Kraftfahrzeugkarosserie (2) bei einem Lackiervorgang zu öffnen oder zu schließen, und/oder
d) **dass** der Handhabungsroboter (1) keine zusätzliche Verfahrachse aufweist, sondern ortsfest angeordnet ist und trotzdem einen ausreichend großen Arbeitsbereich (20) aufweist, um alle Türen (3) an einer Seite einer Kraftfahrzeugkarosserie (2) und einen Kofferraumdeckel (5) und eine Motorhaube (4) der Kraftfahrzeugkarosserie (2) zu öffnen.

9. Beschichtungsanlagenroboter (1) nach einem der vorhergehenden Ansprüche, **dadurch gekennzeichnet,**
a) **dass** der Beschichtungsanlagenroboter (1) eine Traglast von mindestens 1kg, 2kg, 5kg, 10kg, 20kg oder mindestens 50kg aufweist, und/oder
b) **dass** der Beschichtungsanlagenroboter (1) einen Arbeitsbereich (20) aufweist, der sich in waagerechter Richtung über eine Breite von mindestens 1m, 2m, 4m, oder 6m erstreckt, und/oder
c) **dass** der Beschichtungsanlagenroboter (1) einen Arbeitsbereich (20) aufweist, der sich in waagerechter Richtung über eine Länge von mindestens 1m, 2m, 4m, oder 6m erstreckt, und/oder
d) **dass** der Beschichtungsanlagenroboter (1) einen Arbeitsbereich (20) aufweist, der sich in senkrechter Richtung über eine Höhe von mindestens 1m, 2m, 4m, oder 6m erstreckt, und/oder
e) **dass** der Beschichtungsanlagenroboter (1) mindestens zwei, drei, vier oder mindestens fünf bewegliche Roboterachsen (A1-A5) aufweist, und/oder
f) **dass** der Beschichtungsanlagenroboter (1) höchstens sieben, sechs oder höchstens fünf bewegliche Roboterachsen (A1-A5) aufweist, und/oder
g) **dass** der Beschichtungsanlagenroboter (1) mindestens einen elektrischen Achsenantrieb aufweist zum mechanischen Antrieb einer Roboterachse (A1-A5), insbesondere mit einem Drehstromsynchronmotor, und/oder
h) **dass** die Roboterkinematik teilweise seriell und teilweise parallel ist, und/oder
i) **dass** der Beschichtungsanlagenroboter (1) frei programmierbar ist, und/oder
j) **dass** die Roboterkinematik so ausgebildet ist, dass der Effektor (14) bei einer Roboterbewegung in einer konstanten räumlichen Ausrichtung zur Senkrechten gehalten wird.

10. Beschichtungsanlagenroboter (1) nach einem der vorhergehenden Ansprüche, **dadurch gekennzeichnet,**
a) **dass** sich die Störkontur des Beschichtungsanlagenroboters (1) im zusammengeklappten Zustand in waagerechter Richtung über eine Störfläche (F_{STÖR}) von weniger als 1m², 0,5m², 0,25m² oder 0,1m² erstreckt,
b) **dass** die Störfläche (F_{STÖR}) des Beschichtungsanlagenroboter (1) in Längsrichtung der Lackierkabine vorzugsweise eine Länge (L) von weniger als 2m, 1,5m, 1m oder weniger als 75cm aufweist,
c) **dass** die Störfläche (F_{STÖR}) des Beschichtungsanlagenroboters (1) quer zur Lackierkabine vorzugsweise eine Breite (B) von weniger als 1m, 75cm oder 50cm aufweist.

## Claims

1. Coating plant robot (1), in particular as a handling robot (1) for opening or closing a motor vehicle body during a painting process, having a robot kinematics system (6-15) for moving an effector (14) in space, having:
a) a proximally arranged first robot member (6),
b) a second robot member (7) kinematically disposed behind said first robot member (6) and movable relative to said first robot member (6),
c) a first robot arm (8) having a parallel kinematics, the first robot arm (8) being kinematically arranged behind the second robot member (7) and being movable relative to the second robot member (7), and
d) a third robot member (10) which is kinematically arranged behind the first robot arm (8) with the parallel kinematics and is movable relative to the first robot arm (8) with the parallel kinematics,
e) a fourth robot member (11) kinematically disposed behind said third robot member (10) and movable relative to said third robot member (10),
f) a second robot arm (12) having a parallel kinematics, the second robot arm (10) being kinematically arranged behind the fourth robot member (11) and being movable relative to the fourth robot member (11),
g) a fifth robot member (13) kinematically disposed behind said second robot arm (12) with said parallel kinematics and movable relative to said second robot arm (12) with said parallel kinematics; and
h) a sixth robot member (15) kinematically disposed behind said fifth robot member (13) and movable relative to said fifth robot member (13),
**characterized in that**
i) the coating plant robot (1) is arranged at least partially in a painting booth,
j) there is a downward air flow in the spray booth in order to remove excess coating agent mist as quickly as possible downwards from the spray booth,
k) the coating plant robot (1) can be collapsed in order to counteract the downwardly directed air flow in the total collapsed state with the smallest possible interference contour, and
l) the interference contour of the coating plant robot (1) in the folded state extends in a horizontal direction over an interference surface (F_{STÖR}) of less than 2m².

2. Coating plant robot (1) according to claim 1, **characterized in that**
a) the first robot arm (8) with the parallel kinematics has at least two arm parts (8.1, 8.2) each with two pivot joints, so that the first robot arm (8) with the parallel kinematics forms an articulated quadrilateral, in which case the two arm parts (8.1, 8.2) can each be rotated relative to directly adjacent robot members (7, 10), and
b) the pivot joints of one arm part (8.1) have different axes of rotation than the pivot joints of the other arm part (8.2),
c) the axes of rotation of the two arm parts (8.1, 8.2) are preferably all parallel,
d) the parallel kinematics preferably have only one rotary drive in order to pivot the arm parts (8.1, 8.2) of the first robot arm (8) relative to an immediately adjacent robot member (7, 10).

3. Coating plant robot (1) according to claim 2, **characterized in that** the axes of rotation of the four pivot joints of the two arm parts (8.1, 8.2) lie at the corners of a parallelogram (P) or a trapezium (T).

4. Coating plant robot (1) according to one of the preceding claims, **characterized in that**
a) the first robot arm (8) with the parallel kinematics is arranged kinematically directly between two adjacent robot members (7, 10),
b) the first robot arm (8) with the parallel kinematics is pivotable relative to the two immediately adjacent robot members (7, 10), and
c) the first robot arm (8) with the parallel kinematics holds the immediately adjacent robot members (7, 10) in a constant angular relationship relative to one another during a pivoting movement.

5. Coating plant robot (1) according to one of the preceding claims, **characterized in that**
a) the first robot arm (8) with the parallel kinematics and the second robot arm (12) with the parallel kinematics are arranged kinematically one behind the other in series, and/or
b) the pivot joints of the first robot arm (8) with the parallel kinematics and/or of the second robot arm (12) with the parallel kinematics are always aligned substantially horizontally with their rotary axes independently of the position of the coating plant robot (1).

6. Coating plant robot (1) according to one of the preceding claims, **characterized in that**
a) the second robot member (7) can be pivoted about a preferably vertical first pivot axis (A1) relative to the proximal first robot member (6), and/or
b) the second robot member (7) is preferably arranged below the first robot member (6), and/or
c) the first robot arm (8) with the parallel kinematics is pivotable relative to the second robot member (7) about a preferably horizontal second pivot axis (A2), and/or
d) the fourth robot member (11) is pivotable relative to the third robot member (10) about a preferably vertical third pivot axis (A3), and/or
e) the second robot arm (12) with the parallel kinematics is pivotable relative to the fourth robot member (11) about a preferably horizontal fourth pivot axis (A4), and/or
f) the sixth robot member (15) is pivotable relative to the fifth robot member (13) about a preferably perpendicular fifth pivot axis (A5).

7. Coating plant robot (1) according to one of the preceding claims, **characterized in that**
a) the proximal first robot member (6) is stationary, or
b) the proximal first robot member (6) is movable on a traversing rail.

8. Coating plant robot (1) in accordance with one of the preceding claims, **characterized in that**
a) the coating plant robot (1) is a handling robot (1) and the effector (14) is a handling tool (14), in particular a gripper (17) or a hook, which is designed to open or close a motor vehicle body (2) during a painting operation, and/or
b) the handling robot (1) is a door opener which is designed to open or close a door (3) of a motor vehicle body (2) during a painting operation, and/or
c) the handling robot (1) is a hood opener which is designed to open or close a hood (4, 5), in particular an engine hood (4) or a boot lid (5), of a motor vehicle body (2) during a painting operation, and/or
d) the handling robot (1) has no additional travel axis, but is arranged in a stationary manner and nevertheless has a sufficiently large working range (20) in order to open all the doors (3) on one side of a motor vehicle body (2) and a boot lid (5) and an engine hood (4) of the motor vehicle body (2).

9. Coating plant robot (1) according to one of the preceding claims, **characterized in that**
a) the coating plant robot (1) has a payload of at least 1kg, 2kg, 5kg, 10kg, 20kg or at least 50kg, and/or
b) the coating plant robot (1) has a working range (20) which extends in horizontal direction over a width of at least 1m, 2m, 4m, or 6m, and/or
c) the coating plant robot (1) has a working range (20) which extends in horizontal direction over a length of at least 1m, 2m, 4m, or 6m, and/or
d) the coating plant robot (1) has a working range (20) which extends in the vertical direction over a height of at least 1m, 2m, 4m, or 6m, and/or
e) the coating plant robot (1) has at least two, three, four or at least five movable robot axes (A1-A5), and/or
f) the coating plant robot (1) has at most seven, six or at most five movable robot axes (A1-A5), and/or
g) the coating plant robot (1) has at least one electric axis drive for mechanically driving a robot axis (A1-A5), in particular with a three-phase synchronous motor, and/or
h) the robot kinematics are partially serial and partially parallel; and/or
i) the coating plant robot (1) is freely programmable, and/or
j) the robot kinematics is designed such that, during a robot movement, the effector (14) is held in a constant spatial orientation with respect to the vertical.

10. Coating plant robot (1) according to one of the preceding claims, **characterized in that**
a) the interference contour of the coating plant robot (1) in the folded state extends in the horizontal direction over an interference area (F_{STÖR}) of less than 1m², 0.5m², 0.25m² or 0.1m²,
b) the interference area (F_{STÖR}) of the coating plant robot (1) in the longitudinal direction of the painting booth preferably has a length (L) of less than 2m, 1.5m, 1m or less than 75cm,
c) the interference area (F_{STÖR}) of the coating plant robot (1) has a width (B) which is preferably less than 1m, 75cm or 50cm transversely to the painting booth.

## Revendications

1. Robot d'installation de revêtement (1), plus particulièrement sous la forme d'une robot de manutention (1) pour l'ouverture ou la fermeture d'une carrosserie de véhicule lors d'un processus de peinture, avec une cinématique de robot (6 - 15) pour le déplacement d'un effecteur (14) dans l'espace, avec :
a) un premier membre de robot (6) disposé de manière proximale,
b) un deuxième membre de robot (7), qui est disposé cinématiquement derrière le premier membre de robot (6) et qui est mobile par rapport au premier membre de robot (6),
c) un premier bras de robot (8) avec une cinématique parallèle, le premier bras de robot (8) étant disposé cinématiquement derrière le deuxième membre de robot (7) et étant mobile par rapport au deuxième membre de robot (7) et
d) un troisième membre de robot (10), qui est disposé cinématiquement derrière le premier bras de robot (8) avec la cinématique parallèle, et qui est mobile par rapport au premier bras de robot (8) avec la cinématique parallèle,
e) un quatrième membre de robot (11), qui est disposé cinématiquement derrière le troisième membre de robot (10) et qui est mobile par rapport au troisième membre de robot (10),
f) un deuxième bras de robot (12) avec une cinématique parallèle, le deuxième bras de robot (12) étant disposé cinématiquement derrière le quatrième membre de robot (11) et étant mobile par rapport au quatrième membre de robot (11),
g) un cinquième membre de robot (13), qui est disposé cinématiquement derrière le deuxième bras de robot (12) avec la cinématique parallèle et qui est mobile par rapport au deuxième bras de robot (12) avec la cinématique parallèle et
h) un sixième membre de robot (15), qui est disposé cinématiquement derrière le cinquième membre de robot (13) et qui est mobile par rapport au cinquième membre de robot (13),
**caractérisé en ce que**
i) le robot d'installation de revêtement (1) est disposé au moins partiellement dans une cabine de peinture,
j) dans la cabine de peinture, règne un écoulement dirigé vers le bas, afin d'évacuer le brouillard de produit de revêtement en excès le plus rapidement possible vers le bas hors de la cabine de peinture,
k) le robot d'installation de revêtement (1) est repliable afin de n'opposer, dans l'état replié, à l'écoulement dirigé vers le bas, un contour perturbateur le plus petit possible et
l) le contour perturbateur du robot d'installation de revêtement (1) s'étend, dans l'état replié, dans la direction horizontale sur une surface perturbatrice (F_{STÖR}) inférieure à 2 m².

2. Robot d'installation de revêtement (1) selon la revendication 1,
**caractérisé en ce que**
a) le premier bras de robot (8) avec la cinématique parallèle comprend au moins deux parties de bras (8.1, 8.2) avec chacune deux articulations rotatives, de façon à ce que le premier bras de robot (8) avec la cinématique parallèle constitue un quadrilatère articulé, les deux parties de bras (8.1, 8.2) étant chacune rotatives par rapport à des membres de robot (7, 10) immédiatement adjacents et
b) les articulations d'une partie de bras (8.1) ont des axes de rotation différents des articulations rotatives de l'autre partie de bras (8.2),
c) les axes de rotation des deux parties de bras (8.1, 8.2) s'étendent de préférence tous parallèlement entre eux,
d) la cinématique parallèle comprend de préférence un seul entraînement rotatif afin de pivoter les parties de bras (8.1, 8.2) du premier bras de robot (8) par rapport à un membre de robot (7, 10) immédiatement adjacent.

3. Robot d'installation de revêtement (1) selon la revendication 2, **caractérisé en ce que** les axes de rotation des quatre articulations rotatives des deux parties de bras (8.1, 8.2) se trouvent aux angles d'un parallélogramme (P) ou d'un trapèze (T).

4. Robot d'installation de revêtement (1) selon l'une des revendications précédentes, **caractérisé en ce que**
a) le premier bras de robot (8) avec la cinématique parallèle est disposée directement entre deux membres de robot (7, 10) adjacents,
b) le premier bras de robot (8) avec la cinématique parallèle est pivotant par rapport aux deux membres de robot (7, 10) immédiatement adjacents et
c) le premier bras de robot (8) avec la cinématique parallèle maintient, lors d'un mouvement de pivotement, les membres de robot (7, 10) immédiatement adjacents dans un rapport angulaire constant entre eux.

5. Robot d'installation de revêtement (1) selon l'une des revendications précédentes, **caractérisé en ce que**
a) le premier bras de robot (8) avec la cinématique parallèle et le deuxième bras de robot (12) avec la cinématique parallèle sont disposés cinématiquement en série l'un derrière l'autre et/ou
b) les articulations rotatives du premier bras de robot (8) avec la cinématique parallèle et/ou du deuxième bras de robot (12) avec la cinématique parallèle sont orientés, indépendamment de la position du robot d'installation de peinture (1), avec leurs axes de rotation toujours globalement horizontaux.

6. Robot d'installation de revêtement (1) selon l'une des revendications précédentes, **caractérisé en ce que**
a) le deuxième membre de robot (7) est pivotant autour d'un premier axe de pivotement (A1), de préférence vertical, par rapport au premier membre de robot (6) proximal et/ou
b) le deuxième membre de robot (7) est disposé de préférence sous le premier membre de robot (6) et/ou
c) le premier bras de robot (8) avec la cinématique parallèle est pivotant par rapport au deuxième membre de robot (7) autour d'un deuxième axe de pivotement (A2) de préférence horizontal et/ou
d) le quatrième membre de robot (11) est pivotant par rapport au troisième membre de robot (10) autour d'un troisième axe de rotation (A3) de préférence vertical et/ou
e) le deuxième bras de robot (12) avec la cinématique parallèle est pivotant par rapport au quatrième membre de robot (11) autour d'un quatrième axe de pivotement (A4) de préférence horizontal et/ou
f) le sixième membre de robot (15) est pivotant par rapport au cinquième membre de robot (13) autour d'un cinquième axe de pivotement (A5) de préférence vertical.

7. Robot d'installation de revêtement (1) selon l'une des revendications précédentes, **caractérisé en ce que**
a) le premier membre de robot (6) proximal est disposé de manière stationnaire ou
b) le premier membre de robot (6) proximal est mobile sur un rail de déplacement.

8. Robot d'installation de revêtement (1) selon l'une des revendications précédentes, **caractérisé en ce que**
a) le robot d'installation de revêtement (1) est un robot de manutention (1) et l'effecteur (14) est un outil de manutention (14), plus particulièrement une pince (17) ou un crochet qui est conçu pour ouvrir ou fermer une carrosserie de véhicule (2) lors d'un processus de peinture et/ou
b) le robot de manutention (1) est un dispositif d'ouverture de portière qui est conçu pour ouvrir ou pour fermer une portière (3) d'une carrosserie de véhicule (2) lors d'un processus de peinture et/ou
c) le robot de manutention (1) est un dispositif d'ouverture de capot qui est conçu pour ouvrir ou pour fermer un capot (4, 5), plus particulièrement un capot de moteur (4) ou un couvercle de coffre (5), d'une carrosserie de véhicule (2) lors d'un processus de peinture et/ou
d) le robot de manutention (1) ne comprend aucun axe de déplacement supplémentaire mais est disposé de manière stationnaire et présente malgré tout une portée de travail (20) suffisamment grande pour ouvrir toutes les portières (3) sur un côté d'une carrosserie de véhicule (2) et un couvercle de coffre (5) et un capot de moteur (4) de la carrosserie de véhicule (2).

9. Robot d'installation de revêtement (1) selon l'une des revendications précédentes, **caractérisé en ce que**
a) le robot d'installation de revêtement (1) présente une capacité de charge d'au moins 1 kg, 2 kg, 5 kg, 10 kg, 20 kg ou d'au moins 50 kg et/ou
b) le robot d'installation de revêtement (1) présente une portée de travail (20) qui s'étend dans la direction horizontale sur une largeur d'au moins 1 m, 2 m, 4 m ou 6 m et/ou
c) le robot d'installation de revêtement (1) présente une portée de travail (20) qui s'étend dans la direction horizontale sur une longueur d'au moins 1 m, 2 m, 4 m ou 6 m et/ou
d) le robot d'installation de revêtement (1) présente une portée de travail (20) qui s'étend dans la direction verticale sur une hauteur d'au moins 1 m, 2 m, 4 m ou 6 m et/ou
e) le robot d'installation de revêtement (1) comprend au moins deux, trois, quatre ou au moins cinq axes de robot mobiles (A1 - A5) et/ou
f) le robot d'installation de revêtement (1) comprend au maximum sept, six ou au maximum cinq axes de robot mobiles (A1 - A5) et/ou
g) le robot d'installation de revêtement (1) comprend au moins un entraînement d'axe électrique pour l'entraînement mécanique d'un axe de robot (A1 - A5), plus particulièrement avec un moteur synchrone à courant triphasé et/ou
h) la cinématique du robot est partiellement sérielle et partiellement parallèle et/ou
i) le robot d'installation de revêtement (1) est librement programmable et/ou
j) la cinématique du robot est conçue de façon à ce que l'effecteur (14) est maintenu, lors d'un mouvement du robot, dans une orientation spatiale constante par rapport à la verticale.

10. Robot d'installation de revêtement (1) selon l'une des revendications précédentes, **caractérisé en ce que**
a) le contour perturbateur du robot d'installation de revêtement (1) s'étend, dans l'état replié, dans la direction horizontale, sur une surface perturbatrice (F_{STÖR}) inférieure à 1 m², 05 m², 0,25 m² ou 0,1 m²,
b) la surface perturbatrice (F_{STÖR}) du robot d'installation de revêtement (1) présente, dans la direction longitudinale de la cabine de peinture, de préférence une longueur (L) inférieure à 2 m, 1,5 m, 1 m ou inférieure à 75 cm,
c) la surface perturbatrice (F_{STÖR}) du robot d'installation de revêtement (1) présente, transversalement par rapport à la cabine de peinture, de préférence une largeur (B) inférieure à 1 m, 75 cm ou 50 cm.
